# EUROPÄISCHE PATENTSCHRIFT

(11) **EP 0 946 401 B1**
(45) Veröffentlichungstag und Bekanntmachung des Hinweises auf die Patenterteilung: **11.10.2000**
(21) Anmeldenummer: 97952861.9
(22) Anmeldetag: 02.12.1997
(51) Int. Cl.: B65G 57/32

(54) **ANORDNUNG ZUM STAPELN VON PLATTEN**
SYSTEM FOR STACKING SLABS
SYSTEME POUR EMPILER DES PLAQUES

(30) Priorität: 02.12.1996 DE 29620912 U
(43) Veröffentlichungstag der Anmeldung: 06.10.1999
(73) Patentinhaber: Albin Spitzke KG (GmbH & Co.), 22041 Hamburg (DE)
(72) Erfinder: SPITZKE, Wolfgang, D-22885 Barsbüttel (DE)
(74) Vertreter: Glawe, Delfs, Moll & Partner
(86) Internationale Anmeldenummer: EP9706748
(87) Internationale Veröffentlichungsnummer: WO9824718

(56) Entgegenhaltungen:
- EP-A- 0 274 229
- EP-A- 0 283 042
- EP-A- 0 709 289
- US-A- 4 564 104
- US-A- 5 494 400

## Beschreibung

Die Erfindung bezieht sich auf eine Anordnung zum Stapeln einer größeren Anzahl von auf einem Förderer herangeführten Platten durch Abwurf auf einen höhenverstellbaren Stapeltisch.

Bekannte Anordnungen dieser Art (DE-A 2705509, US-A-5494400) führen der Stapeleinrichtung die zu stapelnden Platten einzeln hintereinander auf einem horizontalen Förderband zu. Die vom Ende des Förderbands abgeworfenen Platten prallen mit der vorlaufenden Kante gegen eine Dämpfplatte und fallen dann in einem Stapelschacht, dessen Seitenwände ihre Ausrichtung bewirken, auf einen Stapeltisch, der entsprechend der wachsenden Stapelhöhe abgesenkt wird, bis die für den Stapel vorgesehene Plattenzahl erreicht ist. Die Geschwindigkeit, mit der die Platten einem solchen Stapel zugeführt werden können, ist begrenzt, weil bei zu hoher Geschwindigkeit der auf die abzubremsenden Platten ausgeübte Stoß zu heftig wird, was zu unzulässigen Beschädigungen der Platten führen kann. Dies gilt insbesondere beim Stapeln von pastierten, zur Herstellung von Akkumulatoren vorgesehenen Bleiplatten.

Der Erfindung liegt die Aufgabe zugrunde, eine Anordnung der genannten Art zu schaffen, die eine hohe Arbeitsgeschwindigkeit trotz schonender Behandlung der Platten in der Stapeleinrichtung ermöglicht.

Die erfindungsgemäße Lösung besteht in den Merkmalen des Anspruchs 1, nämlich darin, daß dem Abwurf der Platten auf den Stabpeltisch eine Einrichtung zum Vorstapeln einer kleineren Anzahl von anschließend gemeinsam abzuwerfenden Platten vorgeschaltet ist, die eine Mehrzahl von um eine Drehachse angeordneten Stapelfächern aufweist, die jeweils nacheinander in einer ersten Drehstellung an den Zuförderer und in einer zweiten Drehstellung an den Abwurfförderer angeschlossen sind, und die einen Anschlagdämpfer für die ankommenden Platten aufweisen.

Zwar ist es bekannt (EP-A 709289), bei der Stapelung von Keksen mehrere Stapeleinrichtungen hintereinander zu schalten, die jeweils nur eine geringe Anzahl von Einheiten handhaben. Der Grund dafür soll darin liegen, daß unregelmäßige Oberflächen und Abmessungen der Kekse es praktisch unmöglich machen, eine große Zahl von Keksen gleichzeitig zu handhaben. Dieser Gedankengang trifft auf das Stapeln durch Abwurf einzelner Platten auf einen höhenverstellbaren Stapeltisch offensichtlich nicht zu und legt es daher nicht nahe, vor dem Abwurf auf einen solchen Stapeltisch eine Vorstapeleinrichtung einzuschalten.

Bei der Abwurf-Stapeleinrichtung kommen demzufolge Vorstapel an, die entsprechend der Anzahl der darin enthaltenen Platten mit geringerer Geschwindigkeit ankommen können, als es bei je einzeln ankommenden Platten der Fall wäre. Will man mit Rücksicht auf den Bremsstoß eine bestimmte Grenzgeschwindigkeit der bei der Abwurf-Stapeleinrichtung ankommenden Platten nicht überschreiten, so kann man dank der erfindungsgemäßen Vorstapelung dennoch die Stapelleistung im Vergleich mit herkömmlichen Maschinen vervielfachen. Die Stapelfächer der Vorstapeleinrichtung, bei welcher die Vorstapel mit unverminderter Geschwindigkeit ankommen, sind daher mit einem Anschlag für die ankommenden Platten versehen. Die Vorstapeleinrichtung ist als ein Stern mit einer Vielzahl von über den Umfang verteilten Stapelfächern ausgeführt. Der Stern wird schrittweise derart weitergeschaltet, daß jeweils die im Vorstapel gewünschte Anzahl von Platten in ein Stapelfach gelangt. Wenn beispielsweise jeweils zwei Platten vorgestapelt werden sollen, entspricht die Zeitspanne, während der ein Vorstapelfach an das zuführende Förderband angeschlossen ist, derjenigen Zeitspanne, in welcher zwei Platten auf diesem Förderband ankommen. Vorzugsweise wird die sternförmige Stapeleinrichtung schrittweise weitergeschaltet; jedoch ist auch eine kontinuierliche Bewegung nicht ausgeschlossen.

So wie die Vorstapelfächer periodisch an das zuführende Förderband angeschlossen sind, gelangen sie zur Abgabe der Vorstapel periodisch in eine Abgabestation, in welcher die Vorstapel an einen Weiterförderer abgegeben werden, der sie zu der Abwurfeinrichtung führt oder die unmittelbar an diese angeschlossen ist.

Obgleich die sternförmige Vorstapeleinrichtung als Drehtischanordnung mit vertikaler Achse denkbar ist, läuft sie vorzugsweise um eine horizontale Achse um. Dann erstreckt sich nämlich die Vorstapeleinrichtung hauptsächlich in der Vertikalrichtung, so daß der horizontale Plattenbedarf geringer ist und mehrere Förder- und Stapellinien dicht nebeneinander angeordnet werden können. Auch hat die Anordnung mit horizontaler Achse den Vorteil, daß die Vorstapel im Scheitel der sternförmigen Vorstapeleinrichtung vertikal stehen. In dieser Stellung liegen sie praktisch kräftefrei und somit reibungsarm aneinander. Ihre Ausrichtung quer zur Achse der Vorstapeleinrichtung vollzieht sich durch ihre Anlage im Stapelfach selbsttätig. Auch ihre Ausrichtung parallel zu dieser Achse kann mittels geeigneter, an sich bekannter Ausrichteinheiten leicht innerhalb der Stapelfächer bewerkstelligt werden. Wenn sie leicht auf den Kanten gleiten können, wählt man dafür diejenige Drehstellung aus, in welcher sie vertikal stehen, da dann ihre Reibung aneinander am geringsten ist. Wenn hingegen die Kanten empfindlich sind, wählt man dafür eine Stellung des Stapelfachs aus, in welcher die Platten horizontal oder nur wenig geneigt sind, beispielsweise in der Empfangsstation der Vorstapeleinrichtung.

Bei der Vorstapelung können die Platten von vornherein unmittelbar aufeinandergelegt werden. Es besteht aber auch die Möglichkeit, ihnen in der Vorstapeleinrichtung mindestens zunächst unterschiedliche Trag- und Empfangsorgane zuzuordnen und sie erst auf dem Weg von der Empfangs- zur Abgabestation der Vorstapeleinrichtung zusammenzuführen. Während dieses Wegs ist nämlich hinreichend Zeit dafür vorhanden. Der getrennte Empfang der Platten kann sich empfehlen bei sehr hoher Arbeitsgeschwindigkeit und/oder empfindlicher Beschaffenheit der Platten.

Wenn die zu stapelnden Platten Akkumulatorplatten sind, werden sie in der Regel auf dem Weg vom Ofen zur Stapelung beschleunigt, um sie für bestimmte Zwischenbehandlungen auseinanderzuziehen. In diesem Fall ordnet man die Vorstapeleinrichtung zweckmäßigerweise in einem Förderbereich an, in welchem die Geschwindigkeit noch nicht oder nur wenig beschleunigt ist, damit sie die Vorstapeleinrichtung mit mäßiger Geschwindigkeit erreichen. Jedoch können sie in die Vorstapeleinrichtung mit höherer Geschwindigkeit einlaufen, als sie für die Abwurfstapelung zulässig wäre, weil sie beim Empfang in der Vorstapeleinrichtung leichter abgebremst werden können als im Bereich der Abwurfstapeleinrichtung. Will man trotz hoher Frequenz der Platten deren Zulaufgeschwindigkeit zur Vorstapeleinrichtung vermindern, so kann man dies dadurch tun, daß man statt einer oder mehrerer ankommender Förderlinien mehrere Förderlinien verwendet. Unabhängig von der Zuführgeschwindigkeit bietet sich dieser Weg dann an, wenn Platten unterschiedlicher Art, beispielsweise gegensätzlich gepolte Akkumulatorplatten, vorgestapelt werden sollen.

Die Erfindung wird im folgenden näher unter Bezugnahme auf die Zeichnung erläutert, die ein vorteilhaftes Ausführungsbeispiel schematisch veranschaulicht. Es zeigen:
- Fig. 1: eine perspektivische Ansicht der Anordnung,
- Fig. 2: eine Seitenansicht und
- Fig. 3: eine Draufsicht der sternförmigen Vorstapeleinrichtung.

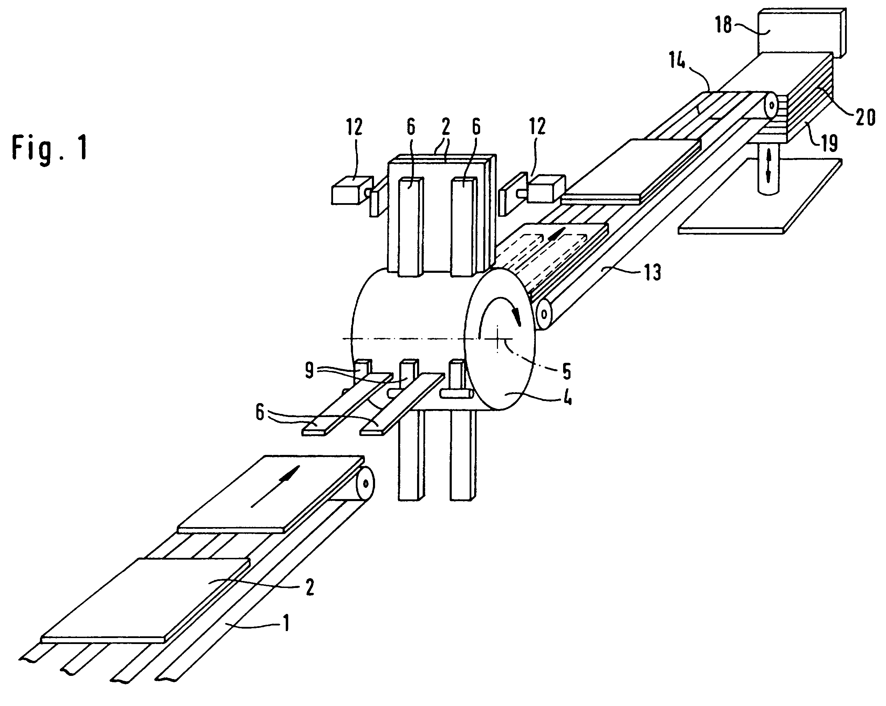

In Fig. 1 bis 4 bildet der Bandförderer 1 einen heranführenden Förderweg, auf dem die zu stapelnden Platten 2 mit einer ersten, hohen Geschwindigkeit herangeführt werden an eine Vorstapeleinrichtung, die in ihrer Gesamtheit mit der Bezugsziffer 3 bezeichnet ist. Von einer Nabe 4 mit horizontaler Achse 5 ragen Armpaare 6 sternförmig vor, zwischen denen sich Stapelfächer 7 bilden, die zur Aufnahme von je zwei oder mehr zu stapelnden Platten 2 dienen. In der Empfangsstation 8 ist eine Dämpfungseinrichtung 9 vorgesehen, die aus nachgiebigen und vorzugsweise bei Auslenkung gedämpft in die Ausgangslage zurückkehrenden Anschlägen gebildet ist.

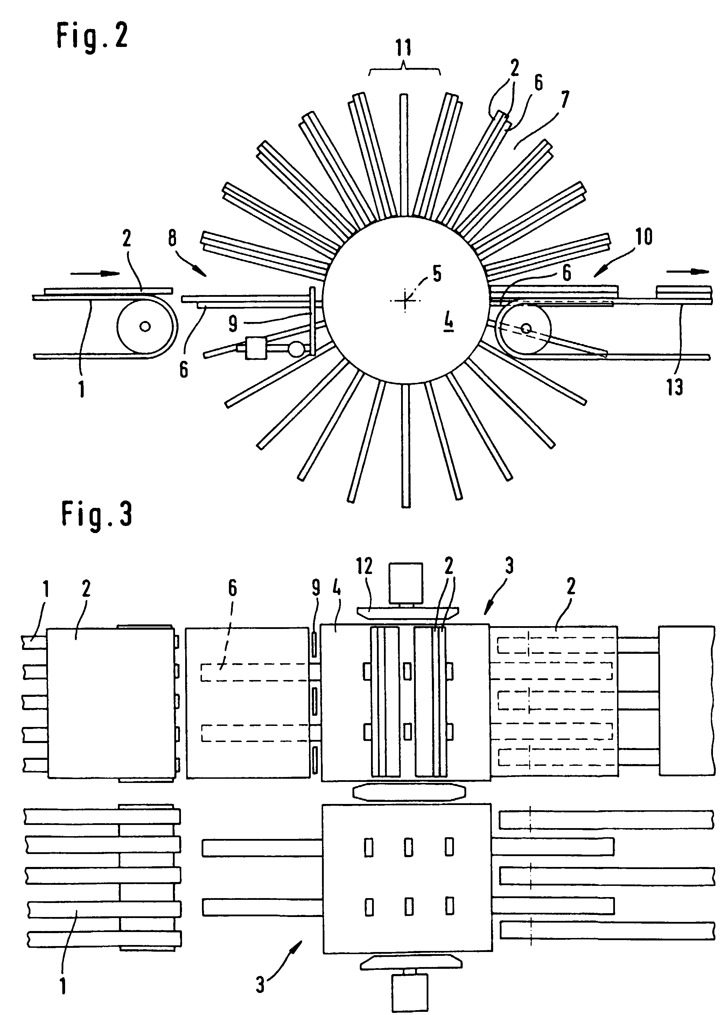

Die sternförmige Vorstapeleinrichtung wird schrittweise um die Achse 5 so gedreht, daß in empfangsbereiter Stellung jeweils ein Armpaar 6 sich etwa horizontal ein wenig unterhalb der Ebene befindet, auf der die Platten 2 auf dem Bandförderer 1 ankommen. Die Dauer dieses Zustands entspricht der Ankunftsperiode zweier aufeinanderfolgender Platten 2. In Fig. 2 erkennt man, daß in der Ankunftsstation eine Platte 2 bereits angekommen ist und auf dem Armpaar 6 liegt, während eine folgende Platte im Begriff ist, von dem Bandförderer 1 auf der bereits liegenden Platte abgeworfen zu werden. Dabei werden die Platten von dem gedämpften Anschlag 9 sanft abgebremst. Nach der Ankunft der zweiten Platte wird der Vorstapelstern rasch um eine Teilung weitergedreht zur Aufnahme des nächsten Plattenpaares. Dabei ist es nicht erforderlich, daß er seine neue Endstellung bereits erreicht hat, wenn die erste Platte des folgenden Plattenpaars bereits in das entsprechende Stapelfach eintritt.

Während der Drehung des Vorstapelsterns von der Empfangsstation 8 zur Abgabestation 10 werden die Platten um 180 Grad gewendet. Dabei durchlaufen sie einen Scheitelbereich 11, in welchem sie vertikal auf einer Kante stehen und nur mit geringer Kraft und Reibung aneinander anliegen. In diesem Bereich ist ein Paar von Querausrichtmitteln 12 vorgesehen, die in bekannter Weise je einen vor- und zurückbewegten, gegen die Plattenseitenkanten fahrenden Stempel aufweisen. Daher ist vorausgesetzt, daß die Kanten, auf denen die Platten liegen, hinreichend robust sind. Andernfalls wird man zur Ausrichtung eine andere Stellung der Stapelfächer aussuchen, z.B. die Empfangsstellung. Die Ausrichtung quer zur Achse 5 ergibt sich automatisch spätestens im Scheitelbereich 11, wenn die beiden Platten mit ihrer achsnahen Kante an der Außenfläche der Nabe 4 anliegen.

Die Übergabe der Vorstapel an den Weiterförderer 13 ergibt sich dadurch, daß der Weiterförderer aus mehreren Strängen besteht, die zwischen und außerhalb der Armpaare 6 liegen. Wenn in der Abgabestation das jeweils abgebende Armpaar so eingestellt ist, daß es ein wenig unterhalb der Tragebene des Weiterförderers 13 liegt, werden die Platten von diesem übernommen und in Pfeilrichtung abgefördert. Der Förderer 13 kann mit einer von dem Förderer 1 unabhängigen Geschwindigkeit betrieben werden.

In dem dargestellten Ausführungsbeispiel vollzieht sich die Weiterschaltung der Stapelfächer 7 gegenüber dem Zuförderer 1 ausschließlich durch Bewegung des Vorstapelsterns. Bei sehr rascher Schaltfolge besteht die Möglichkeit, die Bewegung des Vorstapelsterns durch eine zusätzliche Relativbewegung des benachbarten Endes des Zuförderers 1 zu ergänzen. So kann beispielsweise der Vorstapelstern 3 kontinuierlich bewegt sein, während das Ende des Zuförderers 1 auf- und abwippt, um während der Übergabezeit von zwei Platten in der Nachbarschaft eines Stapelfachs zu bleiben und sich danach zum nächsten Stapelfach zu senken.

Aus der Draufsicht Fig. 3 erkennt man, daß in dem dargestellten Beispiel zwei Förder- und Stapellinien nebeneinander angeordnet sind. Jede einzelne von Ihnen ist gemäß der obenstehenden Beschreibung ausgeführt.

An den Förderer 13 schließt sich in gewohnter Weise die Abwurf-Stapeleinrichtung an. Dabei wird statt herkömmlich jeweils einer Platte nun ein Vorstapel von zwei (oder entsprechend mehr) Platten abgeworfen. Zweckmäßigerweise ist die Zahl der Platten im Stapel ein ganzes Vielfaches des Zahl der Platten im Vorstapel, damit die Vorstapel jeweils gleiche Plattenzahl enthalten können. Jedoch ist es auch denkbar, mit Rücksicht auf abweichende Plattenzahl im Stapel die Zahl der jeweils vorzustapelnden Platten derart unterschiedlich zu steuern, daß sich schließlich im Stapel die gewünschte Plattenzahl ergibt.

Der Abwurf findet durch das Ende des Förderers 13, das somit die Abwurfeinrichtung 14 bildet, gegen eine Prallplatte 18 statt. Die abgeworfenen Platten fallen dann auf einen Tisch 19 bzw. auf die Oberseite eines darauf befindlichen Teilstapels 20, wobei die Höhe des Tisches 19 sukzessive derart abgesenkt wird, daß die Höhe der Empfangsfläche für die abgeworfenen Platten stets dieselbe ist.

## Patentansprüche

1. Anordnung zum Stapeln einer größeren Anzahl von auf einem Förderer (1) herangeführten Platten (2) durch Abwurf auf einen höhenverstellbaren Stapeltisch (19), dadurch gekennzeichnet, daß dem Abwurf (14) eine Vorstapeleinrichtung (3) zum Vorstapeln einer kleineren Anzahl von gemeinsam abzuwerfenden Platten (2) vorgeschaltet ist, die eine Mehrzahl von sternförmig um eine Drehachse angeordneten Stapelfächern (7) aufweist, die jeweils nacheinander in einer ersten Drehstellung der Vorstapeleinrichtung (3) während der Ankunftszeit der kleineren Anzahl von Platten (2) an den Förderer (1) und in einer zweiten Drehstellung an die Abwurfeinrichtung (14) angeschlossen sind, und die einen Anschlagdämpfer (9) für die ankommenden Platten (2) aufweisen.

2. Anordnung nach Anspruch 1, dadurch gekennzeichnet, daß der die Platten (2) heranführende Förderer (1) von einer Förderlinie gebildet ist.

3. Anordnung nach Anspruch 1, dadurch gekennzeichnet, daß der die Platten (2) heranführende Förderer von einer Mehrzahl von Förderlinien gebildet ist.

4. Anordnung nach einem der Ansprüche 1 bis 3, dadurch gekennzeichnet, daß die Abwurfeinrichtung (14) von dem Ende eines Förderers (13) gebildet ist.

5. Anordnung nach einem der Ansprüche 1 bis 4, dadurch gekennzeichnet, daß die Vorstapeleinrichtung (3) mit Querausrichtmitteln (12) versehen ist.

## Claims

1. Arrangement for stacking a relatively large number of plates (2) advanced on a conveyor (1), by ejecting them onto a height-adjustable stacking table (19), characterized in that a prestacking device (3) for prestacking a relatively small number of plates (2) to be ejected together is connected upstream of the ejecting point (14), the prestacking device having a plurality of stacking compartments (7) which are arranged in a star shape about a rotational axis and, in a first rotational position of the prestacking device (3) are, during the arrival time of the relatively small number of plates (2), in each case successively connected to the conveyor (1) and, in a second rotational position, to the ejecting device (14), and which have a stop damper (9) for the arriving plates (2).

2. Arrangement according to Claim 1, characterized in that the conveyor (1) advancing the plates (2) is formed by a conveyor line.

3. Arrangement according to Claim 1, characterized in that the conveyor advancing the plates (2) is formed by a plurality of conveyor lines.

4. Arrangement according to one of Claims 1 to 3, characterized in that the ejecting device (14) is formed by the end of a conveyor (13).

5. Arrangement according to one of Claims 1 to 4, characterized in that the prestacking device (3) is provided with transverse aligning means (12).

## Revendications

1. Système pour empiler un grand nombre de plaques (2), transportées sur un convoyeur (1), par éjection sur une table d'empilage (19) réglable en hauteur, caractérisé en ce qu'avant l'éjection (14) il est monté un dispositif de pré-empilage (3) pour le pré-empilage d'un petit nombre de plaques (2) à éjecter ensemble, qui comporte une pluralité de cases d'empilage (7) disposées en étoile autour d'un axe de rotation et qui sont raccordées chacune, l'une après l'autre, dans une première position de rotation du dispositif de pré-empilage (3), pendant le temps d'arrivée du petit nombre de plaques (2) au convoyeur (1) et qui sont raccordées, dans une deuxième position de rotation, au dispositif d'éjection (14), et qui comportent un amortisseur de butée (9) pour les plaques (2) arrivantes.

2. Système selon la revendication 1, caractérisé en ce que le convoyeur (1) qui transporte les plaques (2) est constitué par une ligne de convoyage.

3. Système selon la revendication 1, caractérisé en ce que le convoyeur qui transporte les plaques (2) est constitué par une pluralité de lignes de convoyage.

4. Système selon l'une des revendications 1 à 3, caractérisé en ce que le dispositif d'éjection (14) est constitué par l'extrémité d'un convoyeur (13).

5. Système selon l'une des revendications 1 à 4, caractérisé en ce que le dispositif de pré-empilage (3) est doté de moyens (12) d'orientation transversale.
